# EUROPÄISCHE PATENTSCHRIFT

(11) **EP 2 736 748 B1**
(45) Veröffentlichungstag und Bekanntmachung des Hinweises auf die Patenterteilung: **29.03.2017**
(21) Anmeldenummer: 12729981.6
(22) Anmeldetag: 27.06.2012
(51) Int. Cl.: B60K 7/00, B60K 17/04, A63C 7/10, A63C 9/00, A63C 9/085, B30B 15/30, H02K 7/116

(54) **ANTRIEBSEINHEIT UND FAHRZEUGACHSE FÜR EIN ELEKTROFAHRZEUG**
DRIVE UNIT AND VEHICLE AXLE FOR AN ELECTRIC VEHICLE
ENSEMBLE D'ENTRAÎNEMENT ET ESSIEU POUR UN VÉHICULE ÉLECTRIQUE

(30) Priorität: 28.07.2011 DE 102011080038
(43) Veröffentlichungstag der Anmeldung: 04.06.2014
(73) Patentinhaber: ZF Friedrichshafen AG, 88046 Friedrichshafen (DE)
(72) Erfinder: MAIR, Ulrich, 88046 Friedrichshafen (DE); POLLMEYER, Stephan, 88046 Friedrichshafen (DE); MÜNSTER, Martin, 82140 Olching (DE)
(86) Internationale Anmeldenummer: PCT/EP2012/062402
(87) Internationale Veröffentlichungsnummer: WO 2013/013921

(56) Entgegenhaltungen:
- EP-A1- 1 977 924
- EP-A1- 2 329 983
- DE-A1-102009 033 531
- US-A1- 2008 257 088
- US-B1- 6 592 486

## Beschreibung

Die Erfindung betrifft eine Antriebseinheit für ein Elektrofahrzeug, umfassend einen in einem Bereich einer Stirnseite einer Fahrzeugachse des Elektrofahrzeugs anordenbare elektrische Maschine, insbesondere einen Elektromotor, sowie eine Getriebeeinheit, die mit dem Elektromotor zum Antrieb eines jeweiligen Rades des Elektrofahrzeugs zusammenwirkt.

Die Erfindung betrifft ebenfalls eine Fahrzeugachse für ein Elektrofahrzeug, umfassend jeweils eine Antriebseinheit an gegenüberliegenden Seiten der Fahrzeugachse zum jeweiligen radnahen Antrieb eines Rades.

Als Elektrofahrzeuge werden Fahrzeuge bezeichnet, die durch elektrische Energie betrieben werden. Unter Elektrofahrzeuge fallen insbesondere Elektroautos, die in den letzten Jahren eine gesteigerte Aufmerksamkeit erfahren aufgrund ihrer möglichen Verminderung von verkehrsbedingten CO₂-Emissionen und einer gewünschten Reduzierung der Abhängigkeit von Erdölen als Grundlage für Benzin, Diesel, etc.

Anstelle des in herkömmlichen Fahrzeugen verwendeten Verbrennungsmotors wird in Elektrofahrzeugen ein Elektromotor eingesetzt, dessen elektrische Energie zum Beispiel durch im Elektroauto mitgeführte Akkumulatoren bereitgestellt wird.

Als Elektromotor können Radnaben-Elektromotoren zum Antrieb eines Elektroautos eingesetzt werden. Der Radnaben-Elektromotor wird dabei direkt in ein Rad des Elektroautos eingebaut und trägt gleichzeitig die Radnabe, so dass ein Teil des Radnaben-Elektromotors als Außenläufer mit dem Rad umläuft.

Radnaben-Elektromotoren weisen jedoch den Nachteil auf, dass dabei das Fahrwerk des Elektroautos weniger komfortabel wird, da der Einsatz von Radnabenmotoren zu einem Anstieg der ungefederten Massen des Elektrofahrzeugs führt. Darüber hinaus sind die Radnabenmotoren direkt Umwelteinflüssen, Stoßbelastungen und den möglichen hohen Temperaturen der Bremsen ausgesetzt, was deren Lebensdauer und Zuverlässigkeit senkt.

Aus der DE 10 2009 033 531 A1 ist ein Kraftfahrzeug mit einer hohlen Portalachse bekannt, die ein rohrförmiges Gehäuse aufweist. In dem rohrförmigen Gehäuse ist auf beiden Seiten der Achse jeweils eine elektrische Maschine zum Antrieb eines zugehörigen Fahrzeugrades aufgenommen. An beiden Gehäuseenden ist jeweils ein Planetengetriebe angeflanscht, das mit der zugehörigen elektrischen Maschine zusammenwirkt. An jedem Planetengetriebe ist ein weiteres Untersetzungsgetriebe in Form einer Stirnradstufe angeflanscht, das abtriebsseitig jeweils mit einem Fahrzeugrad verbunden ist.

Eine Aufgabe der vorliegenden Erfindung ist es daher, eine Antriebseinheit und eine Fahrzeugachse zur Verfügung zu stellen, welche zum einen ungefederte Massen vermindert und gleichzeitig äußerst kostengünstig herstellbar ist. Daneben soll eine Wartung vereinfacht werden.

Diese Aufgabe wird durch eines Antriebseinheit für ein Elektrofahrzeug mit den Merkmalen des Anspruchs 1 gelöst.

Die Erfindung löst die Aufgabe ebenfalls durch eine Fahrzeugverbundlenkerachse gemäß Anspruch 11.

Die Antriebseinheit kann somit sowohl auf der linken und/oder rechten Seite als auch an einer Vorder- oder Hinterachse zum Antrieb eines Vorderrades oder Hinterrades eingesetzt werden. Auf diese Weise können die Herstellungskosten für eine Antriebseinheit wesentlich gesenkt werden, da keine Änderungen in der Konstruktion der Antriebseinheit, insbesondere für die für die linke und rechte Fahrzeugseite als auch für die radnahe Anordnung an Vorder- und Hinterachse notwendig sind. Insgesamt können so bei einem vierrädrigen Elektrofahrzeug insgesamt vier gleiche elektrische Maschinen verwendet werden. Weiterhin werden durch die radnahe Anordnung, beispielsweise an einer Hinterachse des Elektrofahrzeugs insgesamt die ungefederten Massen gemindert, da die Antriebseinheit nicht im Rad selbst, also als Radnabenmotor, eingesetzt wird: Wird die Antriebseinheit radnah an einem Längslenker einer Verbundlenkerachse angeordnet, vollführt die Antriebseinheit nicht die gesamte Hubbewegung durch den Federweg des Rades, sondern lediglich im Wesentlichen eine Drehung um einen Anlenkpunkt der Verbundlenkerachse an der Karosserie des Elektrofahrzeugs.

Erfindungsgemäß umfasst die Getriebeeinheit ein Planetengetriebe mit Hohlrad, wobei das Hohlrad an einer Aufnahmeeinrichtung der elektrischen Maschine in axialer Richtung an der elektrischen Maschine festlegbar ist. Der durch die Aufnahmeeinrichtung erzielte Vorteil ist, dass eine zuverlässige Festlegung der Getriebeeinheit mit der elektrischen Maschine und so auch eine einfachere Festlegung der Antriebseinheit an einer Fahrzeugachse ermöglicht wird. Auf diese Weise kann die Getriebeeinheit mit Planetengetriebe über eine Sonnenwelle, die insbesondere der Antriebsachse der elektrischen Maschine entspricht, angetrieben werden und der Abtrieb über einen Steg des Nebengetriebes erfolgen; das Hohlrad ist dabei an der Aufnahmeeinrichtung drehfest angeordnet, so dass eine zuverlässige Übertragung des Antriebsmoments der elektrischen Maschine über das Planetengetriebe auf die Stirnradstufe als weitere Getriebekomponente der Getriebeeinheit ermöglicht wird.

Weitere vorteilhafte Ausführungsformen, Merkmale und Vorteile der Erfindung sind in den Unteransprüchen beschrieben.

Zweckmäßigerweise ist die elektrische Maschine, insbesondere deren Gehäuse, symmetrisch ausgebildet. Auf diese Weise ist eine besonders einfache Austauschbarkeit der elektrischen Maschine und auch der Antriebseinheit gewährleistet. Gleichzeitig ist auch eine einfache Festlegung der Antriebseinheit an einer Fahrzeugachse möglich, da eine symmetrische Ausbildung des Gehäuses eine Festlegung der Antriebseinheiten für einen Mechaniker vereinfacht. Ebenso ist bei einer robotergestützten Montage eine wesentliche Zeitersparnis möglich, da die Antriebseinheit nicht zunächst in eine vorbestimmte Position aufwändig gedreht werden muss; durch die symmetrische Ausbildung sind mehrere Festlegungspositionen der Antriebseinheit an der Fahrzeugachse möglich, ohne dass deren Funktion eingeschränkt wird.

Vorteilhafterweise weist die elektrische Maschine Festlegungsmittel auf, welche symmetrisch, insbesondere radialsymmetrisch zu einer jeweiligen Antriebsachse des elektrischen Maschine angeordnet sind. Auf diese Weise ist eine zuverlässige Festlegung der elektrischen Maschine mittels der Festlegungsmittel an einer Fahrzeugachse im radnahen Bereich noch einfacher möglich.

Zweckmäßigerweise sind zumindest ein Kühlmitteleinlauf und ein Kühlmittelablauf zum Kühlen der elektrischen Maschine angeordnet, wobei diese symmetrisch zu den Festlegungsmitteln und/oder beabstandet voneinander und hintereinander parallel zu einer Antriebsachse der elektrischen Maschine angeordnet sind. Auf diese Weise ist eine einfache Zugänglichkeit zum Anschluss von Schläuchen für den Kühlmittelkreislauf zum Kühlen der elektrischen Maschine, insbesondere des Elektromotors möglich. Darüber hinaus wird die Wartung bei einer Beabstandung des Kühlmitteleinlaufs und Kühlmittelablaufs voneinander weiter vereinfacht.

Zweckmäßigerweise umfasst die Aufnahmeeinrichtung zumindest eine Aufnahmenase, welche insbesondere U-förmig ausgebildet ist. Dabei kann insbesondere die offene Seite der U-förmigen Aufnahmenase in radialer Richtung ausgehend von einer Antriebsachse der elektrischen Maschine orientiert sein. Ebenso können mehrere Aufnahmenasen umfänglich um die Antriebsachse der elektrischen Maschine und beabstandet voneinander angeordnet sein. Durch die U-förmige Ausbildung kann eine besonders einfache Auslegung einer Getriebeeinheit mittels der Aufnahmeeinrichtung an der elektrischen Maschine ermöglicht werden.

Zweckmäßigerweise ist das Hohlrad mittels eines Sicherungsringes an der Aufnahmeeinrichtung, insbesondere drehfest, festgelegt. Der damit erzielte Vorteil ist, dass eine weiche Ankopplung des Hohlrades an der elektrischen Maschine und somit eine akustische Abkopplung des Hohlrades von der Umgebung ermöglicht wird. Dabei ist es ebenfalls möglich, die Antriebseinheit an einer Fahrzeugachse festlegen und das Hohlrad mittels einer weiteren Festlegung an einem Längslenker der Fahrzeugachse festzulegen.

Vorteilhafterweise umfasst das Hohlrad zumindest eine axiale und/oder radial umlaufende Nut. Mittels einer Axialnut, die vorzugsweise mit der Aufnahmeeinrichtung der elektrischen Maschine korrespondiert, kann das Hohlrad mit der elektrischen Maschine in Eingriff gebracht und festgelegt werden. Dadurch wird eine in Umfangsrichtung des Hohlrades feste Anbindung bzw. drehfeste Anordnung gewährleistet. Umfasst das Hohlrad eine radial umlaufende Nut kann ein Sicherungsring in diese Nut eingebracht werden, so dass der Sicherungsring sowohl in der radial umlaufenden Nut als auch in den U-förmig ausgebildeten Aufnahmenasen eingreift und so das Hohlrad in axialer Richtung an dem Elektromotor festlegt.

Zweckmäßigerweise ist ein Drehzahlsensor für die Drehzahl einer der Getriebeeinheit und/oder der elektrischen Maschine als ABS-Sensor ausgebildet. Der damit erzielte Vorteil ist, dass damit der ABS-Sensor nicht direkt an den Rädern selbst angeordnet werden muss und somit Witterungseinflüssen ausgesetzt ist, sondern der ABS-Sensor kann direkt in der Getriebeeinheit angeordnet sein, was die Zuverlässigkeit des ABS-Sensors erhöht. Gleichzeitig kann auf einen zusätzlichen ABS-Sensor zusätzlich zu einem Drehzahlsensor für die elektrische Maschine verzichtet werden, was Herstellungskosten für die Getriebeeinheit senkt.

Vorteilhafterweise ist an der Welle der Getriebeeinheit ein Magnetring zur Erfassung der Drehzahl der Welle durch den ABS-Sensor angeordnet. Der damit erzielte Vorteil ist, dass damit eine verschleißarme Detektion der Drehzahl der Welle ermöglicht wird, was die Zuverlässigkeit des ABS-Sensors erhöht. Darüber ist es ebenfalls möglich, dass der ABS-Sensor die Drehzahl der Welle entweder radial oder axial über Zähne von Zahnrädern der Getriebeeinheit erfasst. Ebenso kann der Sensor an einem beliebigen Antriebszahnrad, insbesondere Stirnrad und/oder Ritzel und/oder Steg und/oder Planetenwelle und/oder Sonnenwelle angeordnet werden.

Zweckmäßigerweise ist das Hohlrad aus Stahl und/oder das Gehäuse der elektrischen Maschine aus Aluminium hergestellt. Bei Herstellung des Gehäuses der elektrischen Maschine aus Aluminium kann Wärme über die Mantelfläche des Gehäuses der elektrischen Maschine zuverlässig abgeführt werden. Die Mantelfläche des Gehäuses der elektrischen Maschine kann dabei mit einer spiralförmigen umlaufenden Nut für die Kühlung versehen sein. Die Herstellung des Hohlrades aus Stahl gewährleistet eine ausreichende Festigkeit der Verbindung zwischen Getriebeeinheit und elektrischer Maschine

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen jeweils in schematischer Form:
- Fig. 1a: einen Aufbau einer Fahrzeugachse eines Fahrzeugs;
- Fig. 1b: den linken Bereich der Fahrzeugachse gemäß Figur 1 im Detail in dreidimensionaler Ansicht;
- Fig. 2a: einen Elektromotor einer Antriebseinheit gemäß einer ersten Ausführungsform der vorliegenden Erfindung im Querschnitt;
- Fig. 2b: einen Elektromotor gemäß Figur 2a in dreidimensionaler Ansicht;
- Fig. 2c: einen Elektromotor gemäß Figur 2a mit Hohlrad;
- Fig. 2d: einen Elektromotor gemäß Figur 2d mit festzulegendem Hohlrad;
- Fig. 3a: einen Elektromotor einer Antriebseinheit mit festgelegten Hohlrad gemäß Fig. 2c;
- Fig. 3b: einen Elektromotor gemäß Figur 3a mit Blickrichtung entlang der Antriebsachse des Elektromotors; und
- Fig. 4: einen Querschnitt durch eine Getriebeeinheit einer Antriebseinheit gemäß einer zweiten Ausführungsform der vorliegenden Erfindung.

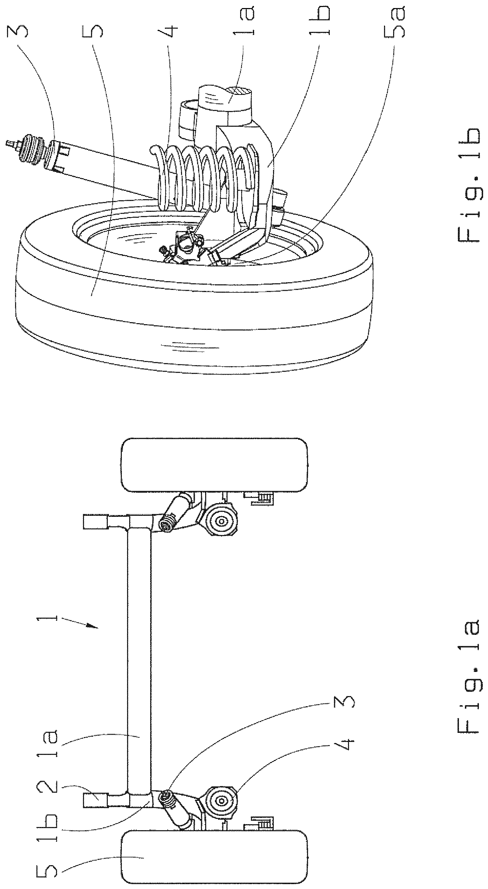

Figur 1 zeigt einen Aufbau einer Fahrzeugachse eines Fahrzeugs.

In Figur 1 bezeichnet Bezugszeichen 1 eine Fahrzeugachse, beispielsweise eine Hinterachse eines Kraftfahrzeugs. Die Fahrzeugachse 1 umfasst ein Querprofil 1a, der sich senkrecht zur Fahrzeugachse 1 über die Breite des Fahrzeugs erstreckt. An den jeweiligen Enden des Querprofils 1a sind Längslenker 1 b angeordnet. Zur Festlegung der Fahrzeugachse 1 am Fahrzeug sind entsprechende Lager 2 an den Enden des Querprofils 1 a angeordnet. Weiterhin ist ein Dämpfer 3 und eine Feder 4 angeordnet, die eine Dämpfung eines Rad 5 des Fahrzeugs während des Betriebes des Fahrzeugs bereitstellen. Eine radnahe Antriebseinheit wird dabei beispielsweise im Bereich des Längslenkers 1b, insbesondere ausgebildet als Längslenker 1 b, angeordnet.

In Figur 1b ist der dreidimensionale Aufbau der linken Seite der Fahrzeugachse 1 gemäß Fig 1 a im Detail gezeigt. An dem Querprofil 1 a ist der Längslenker 1 b angeordnet, an dem wiederum ein Dämpfer 3 sowie eine Feder 4, die beide mit dem Aufbau des Fahrzeugs verbunden sind, angeordnet sind. Das Rad 5 ist dabei über Radlager 5a drehbar gelagert und mit dem Längslenker 1 b verbunden.

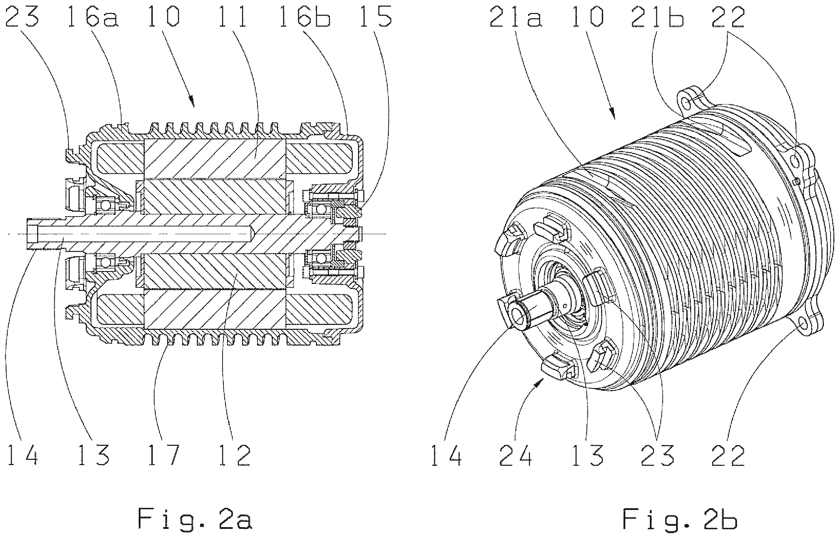

Figur 2a zeigt einen Elektromotor einer Antriebseinheit gemäß einer ersten Ausführungsform der vorliegenden Erfindung im Querschnitt.

In Figur 2a bezeichnet Bezugszeichen 10 einen Elektromotor für eine radnahe Antriebseinheit. Der Elektromotor 10 umfasst eine Antriebsachse 13, an deren offenen Ende eine Mitnahmeverzahnung 14, beispielsweise ein Sonnenrad eines Planetengetriebes angeordnet ist. Auf der der Mitnahmeverzahnung 14 gegenüberliegenden Seite der Antriebsachse 13 des Elektromotors 10 ist ein Drehzahlsensor 15 zur Erfassung der Drehzahl des Elektromotors 10 angeordnet. Insgesamt umfasst der Elektromotor 10 in üblicher Weise einen innerhalb des Gehäuses 16a des Elektromotors 10 liegenden Stator 11 und einen innerhalb des Stators 11 liegenden Rotor 12 zum Antrieb der Antriebsachse 13. Das Gehäuse 16a des Elektromotors 10 wird an der Seite des Drehzahlsensors 15 durch einen Deckel 16b luft- und fluiddicht verschlossen. Auf der äußeren Seite des Gehäuses 16a im Bereich des Stators sind umlaufende Kühlrippen 17 angeordnet, um die Wärme des Elektromotors 10 an die Umgebung möglichst effektiv abgeben zu können.

Figur 2b zeigt einen Elektromotor gemäß Figur 2a in dreidimensionaler Ansicht.

In Figur 2b ist der Elektromotor 10 gemäß Figur 2a gezeigt. Dabei ist der Elektromotor 10 wie auch in Figur 2a symmetrisch und patronenförmig ausgebildet, so dass in einem Reparaturfall der Elektromotor 10 einfach ausgetauscht werden kann, ohne eine Getriebeeinheit vollständig zerlegen zu müssen. Auf der Stirnseite der Mitnahmeverzahnung 14, der Aufnahmeseite 24, weist der Elektromotor Aufnahmenasen 23 auf, die U-förmig ausgebildet sind und deren Öffnung in radialer Richtung von der Antriebswelle 13 nach außen zeigt. Weiterhin sind im Bereich der gegenüberliegenden Stirnseite umlaufend vorstehende Ösen 22 vorgesehen, die zur Verschraubung des Elektromotors 10 an einer Getriebeeinheit und/oder an einer Fahrzeugachse angeordnet sind. Auf der oberen Seite sind gemäß Fig. 2b ein Kühlmittelzulauf 21 a und ein Kühlmittelablauf 21 b gezeigt, die voneinander in axialer Richtung beabstandet sind und zum Beaufschlagen eines Kühlmittelkreislaufs des Elektromotors mit Kühlmittel dienen.

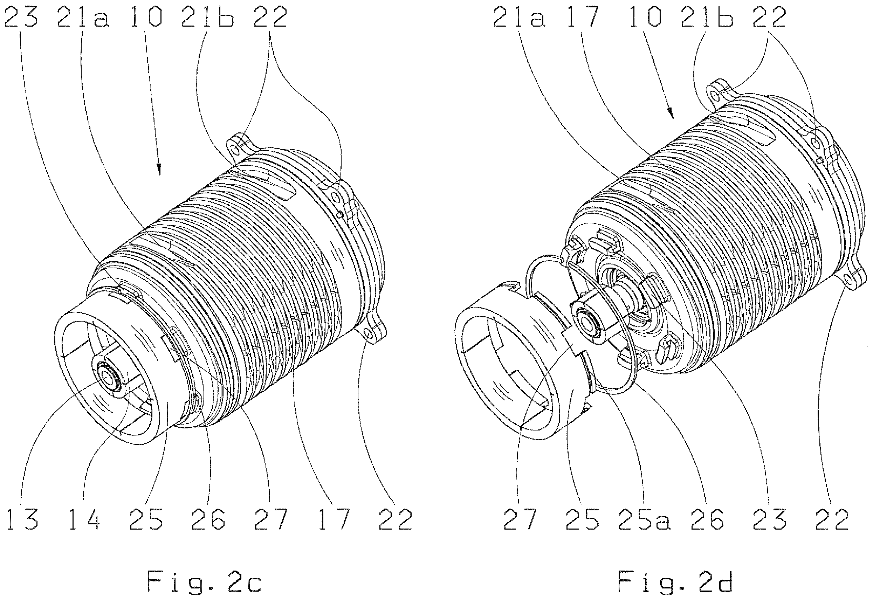

In Figur 2c ist nun ein Hohlrad 25 an der Stirnseite des Elektromotors 10 an den Aufnahmenasen 23 angeordnet. Das Hohlrad 25 weist Nuten 27 verteilt über den Umfang des Hohlrades 25 auf, die zu den Aufnahmenasen 23 auf der Aufnahmeseite 24 des Elektromotors 10 korrespondieren. Das Hohlrad 25 wird - wie in den Figuren 2c und 2d gezeigt - mit den jeweiligen axialen Nuten 27 in die Aufnahmenasen 23 gedrückt. Ein an dem Hohlrad angeordnete Umlaufnut 25a ist so ausgebildet, dass diese bei formschlüssigen Anliegen des Hohlrades 25 mit den Nuten 27 in den korrespondierenden Aufnahmenasen 23 des Elektromotors 10, insbesondere durch die U-Form der Aufnahmenasen 23, und die durch die Nuten 27 unterbrochenen Umlaufnut 25a insgesamt eine umlaufende Vertiefung bilden. In diese Vertiefung wird ein Sicherungsring 26 eingebracht, der dann das Hohlrad 25 in axialer Richtung an dem Elektromotor 10 festlegt. Bei Eingriff der Nuten 27 des Hohlrades 25 und der Aufnahmenasen 23 legt das Hohlrad 25 auch drehfest an dem Elektromotor 10 fest.

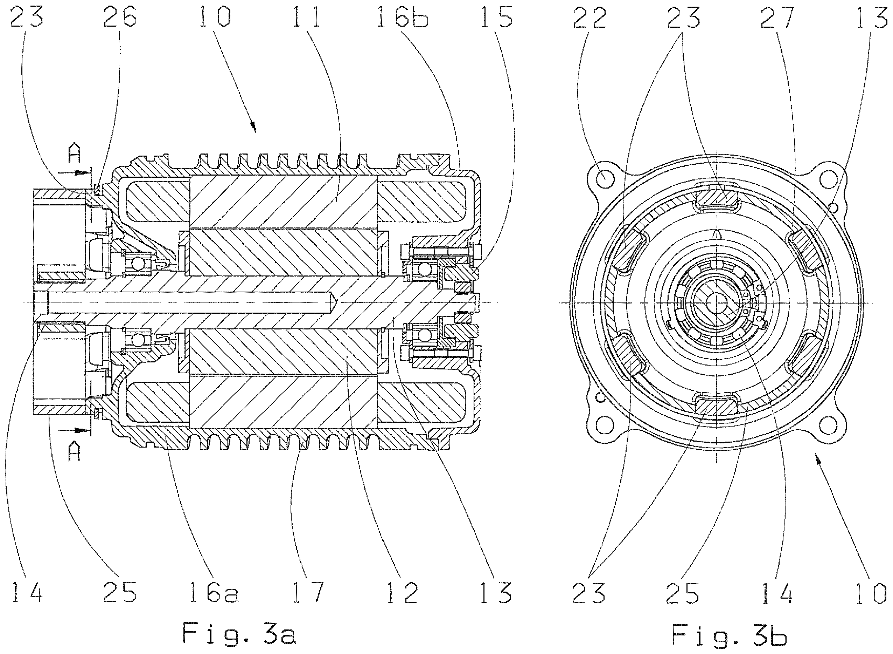

Figur 3a zeigt einen Elektromotor einer Antriebseinheit mit festgelegten Hohlrad gemäß Fig. 2c.

In Figur 3a ist nun im Querschnitt der Elektromotor 10 mit daran angeordneten Hohlrad 25 gemäß Figur 2c im Querschnitt gezeigt. Das Hohlrad 25 ist dabei drehfest mit dem Elektromotor 10 über den Eingriff der Nuten 27 in die Aufnahmenasen 23 und über den Sicherungsring 26 in axialer Richtung festgelegt. Dies verdeutlicht nochmals Figur 3b. Dort ist der Schnitt entlang der Schnittachse A-A der Figur 3a gezeigt. Zu erkennen sind die Aufnahmenasen 23, in die die Nuten 27 des Hohlrades 25 eingreifen. Im Inneren ist die Antriebsachse 13 des Elektromotors 10 zu sehen, die im Bereich des Hohlrades eine Mitnahmeverzahnung 14 aufweist.

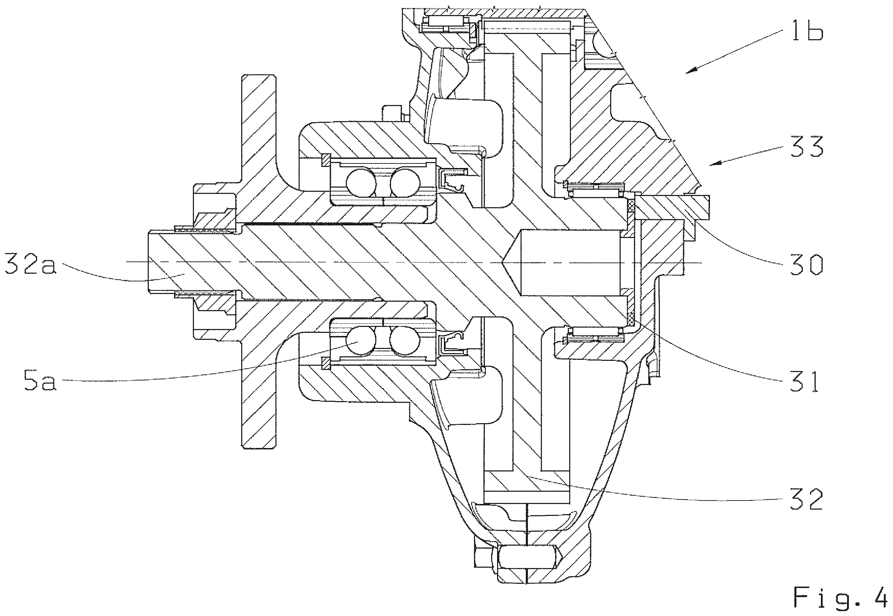

Figur 4 zeigt einen Querschnitt durch eine Getriebeeinheit einer Antriebseinheit gemäß einer zweiten Ausführungsform der vorliegenden Erfindung.

In Figur 4 ist eine Getriebeeinheit 33 für einen radnahen Antrieb eines Elektro-fahrzeugs gezeigt, welche im Wesentlichen im Bereich des Längslenkers 1 b einer Fahrzeugachse angeordnet ist. Weiterhin zu sehen ist ein Stirnrad 32 einer Ritzel-Stirnrad-Anordnung. Eine Stirnwelle ist mittelbar mit einem Elektromotor 10 zum Antrieb eines Rades (nicht gezeigt) verbunden. Die Antriebswelle 32a für das Rad 5 ist über Radlager 5a drehbar gelagert. Auf der dem Radlager 5a gegenüberliegenden Seite des Stirnrades 32 ist an der Antriebswelle 32a ein Magnetring 31 angeordnet. Ein ABS-Sensor 30 ist im Bereich des Magnetringes 31 angeordnet, um die Drehzahl der Antriebsachse 32a zu bestimmen. Daneben ist es möglich, auch weitere ABS-Sensoren, die an weiteren Antriebszahnrädern bzw. deren Wellen angeordnet sind, insbesondere Stirnradwelle, Ritzelwelle, Stegwelle, Planetenwelle, Sonnenwelle anzuordnen. Der ABS-Sensor 30 kann radial oder axial eine Drehzahl der jeweiligen Welle über die Wellenzähne des Zahnrades bestimmen.

Zusammenfassend weist die Erfindung unter anderem die Vorteile auf, dass ein Hohlrad in radialer Richtung einfach und zuverlässig an einer elektrischen Maschine angekoppelt werden kann und somit eine akustische Abkopplung des Hohlrades von der Umgebung ermöglicht wird. Weiterhin kann die Antriebseinheit günstig hergestellt werden, da diese sowohl an der Vorder- und/oder Hinterachse als auch auf der linken und/oder rechten Seite ohne weitere Konstruktionsmaßnahmen zum radnahen Antrieb eines Rades eines Elektrofahrzeugs angeordnet werden kann. Durch die Aufnahmenasen und korrespondierende Nuten kann das Hohlrad äußerst zuverlässig drehfest an dem Elektromotor festgelegt werden. Ebenso kann auf einem zusätzlichen ABS-Sensor an einem Rad des Kraftfahrzeugs verzichtet werden, und der ABS-Sensor in die Getriebeeinheit der Antriebseinheit integriert werden, was die Herstellungskosten senkt und die Zuverlässigkeit des ABS-Sensors erhöht.

Obwohl die vorliegende Erfindung vorstehend anhand bevorzugter Ausführungsbeispiele beschrieben wurde, ist sie nicht darauf beschränkt, sondern auf vielfältige Weise modifizierbar.

### Bezugszeichen

- 1: Fahrzeugachse
- 1a: Querprofil
- 1b: Längslenker
- 2: Lager
- 3: Dämpfer
- 4: Feder
- 5: Rad
- 5a: Radlager
- 10: Elektromotor
- 11: Stator
- 12: Rotor
- 13: Antriebsachse
- 14: Mitnahmeverzahnung
- 15: Drehzahlsensor
- 16a: Gehäuseelektromotor
- 16b: Deckel
- 17: Kühlrippe
- 21a: Kühlmittelzulauf
- 21b: Kühlmittelablauf
- 22: Öse
- 23: Aufnahmenase
- 24: Aufnahmeseite
- 25: Hohlrad
- 25a: Umlaufnut
- 26: Sicherungsring
- 27: Nut
- 30: ABS-Sensor
- 31: Magnetring
- 32: Stirnrad
- 32a: Antriebswelle
- 33: Getriebeeinheit

## Patentansprüche

1. Antriebseinheit (10, 33) für ein Elektrofahrzeug, umfassend eine in einem Bereich einer Stirnseite einer Fahrzeugachse (1) des Elektrofahrzeugs anordenbare elektrische Maschine (10) sowie eine Getriebeeinheit (33), die mit der elektrischen Maschine (10) zum Antrieb des jeweiligen Rades (5) des Elektrofahrzeugs zusammenwirkt, wobei
es sich bei der Fahrzeugachse (1) um eine Verbundlenkerachse handelt, wobei die elektrische Maschine (10) und die Getriebeeinheit (33) radnah an einem Längslenker (1 b) der Fahrzeugachse (1) anordenbar sind, und wobei die elektrische Maschine (10) derart ausgebildet ist, dass die elektrische Maschine (10) an einer beliebigen der beiden Stirnseiten der Fahrzeugachse (1) in der Antriebseinheit zum Antrieb des jeweiligen Rades (4) radnah anordenbar ist, wobei
die Getriebeeinheit (33) ein Planetengetriebe mit Hohlrad (25) umfasst, wobei das Hohlrad (25) an einer Aufnahmeeinrichtung (23) der elektrischen Maschine (10) in axialer Richtung an der elektrischen Maschine (10) festlegbar ist, wobei
die Getriebeeinheit (33) eine Stirnradstufe umfasst, und wobei
das Antriebsmoment der elektrischen Maschine (10) über das Planetengetriebe auf die Stirnradstufe übertragen werden kann.

2. Antriebseinheit (10, 33) gemäß Anspruch 1, **dadurch gekennzeichnet, dass** die elektrische Maschine (10), insbesondere deren Gehäuse, symmetrisch ausgebildet ist.

3. Antriebseinheit (10, 33) gemäß zumindest einem der Ansprüche 1-2, **dadurch gekennzeichnet, dass** die elektrische Maschine (10) Festlegungsmittel (22) aufweist, welche symmetrisch, insbesondere radialsymmetrisch, zu einer jeweiligen Antriebsachse (13) der elektrischen Maschine (10) angeordnet sind.

4. Antriebseinheit (10, 33) gemäß zumindest einem der Ansprüche 1-3, **dadurch gekennzeichnet, dass** zumindest ein Kühlmitteleinlauf (21 a) und ein Kühlmittelablauf (21 b) zum Kühlen der elektrischen Maschine (10) angeordnet sind, wobei diese symmetrisch zu den Festlegungsmitteln (22) und/oder beabstandet voneinander und hintereinander parallel zu einer Antriebsachse (13) der elektrischen Maschine(10) angeordnet sind.

5. Antriebseinheit (10, 33) gemäß zumindest einem der Ansprüche 1-4, **dadurch gekennzeichnet, dass** die Aufnahmeeinrichtung (23) zumindest eine Aufnahmenase umfasst, welche insbesondere U-förmig ausgebildet ist.

6. Antriebseinheit (10, 33) gemäß zumindest einem der Ansprüche 1-5, **dadurch gekennzeichnet, dass** das Hohlrad (25) mittels eines Sicherungsringes (26) an der Aufnahmeeinrichtung (23), insbesondere drehfest, festgelegt ist.

7. Antriebseinheit (10, 33) gemäß zumindest einem der Ansprüche 1-6, **dadurch gekennzeichnet, dass** das Hohlrad (25) zumindest eine axiale und/oder radial umlaufende Nut (27) umfasst.

8. Antriebseinheit (10,33) gemäß zumindest einem der Ansprüche 1-7, **dadurch gekennzeichnet, dass** ein Drehzahlsensor (15, 30) für die Drehzahl einer Welle der Getriebeeinheit (33) und/oder der elektrischen Maschine (10) als ABS-Sensor (30) ausgebildet ist.

9. Antriebseinheit (10, 33) gemäß Anspruch 8, **dadurch gekennzeichnet, dass** an der Welle der Getriebeeinheit (33) ein Magnetring (31) zur Erfassung der Drehzahl der Welle durch den ABS-Sensor (30) angeordnet ist.

10. Antriebseinheit (10, 33) gemäß zumindest einem der Ansprüche 1-9, **dadurch gekennzeichnet, dass** das Hohlrad (25) aus Stahl und/oder das Gehäuse der elektrischen Maschine (10) aus Aluminium hergestellt ist.

11. Fahrzeugverbundlenkerachse (1), umfassend jeweils eine Antriebseinheit (10, 33) gemäß zumindest einem der Ansprüche 1-10 an jeweils gegenüberliegenden Seiten der Verbundlenkerachse (1) an jeweils einem Längslenker (1b) zum jeweiligen radnahen Antrieb eines Rades.

## Claims

1. Drive unit (10, 33) for an electric vehicle, comprising an electric machine (10) which can be arranged in a region of an end side of a vehicle axle (1) of the electric vehicle and comprising a gearing unit (33) which interacts with the electric machine (10) for the purposes of driving the respective wheel (5) of the electric vehicle, wherein the vehicle axle (1) is a twist beam axle, wherein the electric machine (10) and the gearing unit (33) are arrangeable near to a wheel on a longitudinal link (1b) of the vehicle axle (1), and wherein the electric machine (10) is designed such that the electric machine (10) is arrangeable near to the wheel, at either of the two end sides of the vehicle axle (1), in the drive unit for the purposes of driving the respective wheel (4), wherein the gearing unit (33) comprises a planetary gearing with internal gear (25), wherein the internal gear (25) is fixable, on a receiving device (23) of the electric machine (10), in an axial direction to the electric machine (10), wherein the gearing unit (33) comprises a spurgear stage, and wherein the drive torque of the electric machine (10) can be transmitted via the planetary gearing to the spur-gear stage.

2. Drive unit (10, 33) according to Claim 1, **characterized in that** the electric machine (10), in particular the housing thereof, is of symmetrical form.

3. Drive unit (10, 33) according to at least one of Claims 1 and 2, **characterized in that** the electric machine (10) has fixing means (22) which are arranged symmetrically, in particular radially symmetrically, with respect to a respective drive axle (13) of the electric machine (10).

4. Drive unit (10, 33) according to at least one of Claims 1 to 3, **characterized in that** at least one coolant inlet (21a) and one coolant outlet (21b) for the cooling of the electric machine (10) are provided, wherein said coolant inlet and outlet are arranged symmetrically with respect to the fixing means (22) and/or spaced apart from one another and one behind the other parallel to a drive axle (13) of the electric machine (10).

5. Drive unit (10, 33) according to at least one of Claims 1-4, **characterized in that** the receiving device (23) comprises at least one receiving lug which is in particular of U-shaped form.

6. Drive unit (10, 33) according to at least one of Claims 1-5, **characterized in that** the internal gear (25) is fixed, in particular rotationally conjointly, to the receiving device (23) by way of a securing ring (26).

7. Drive unit (10, 33) according to at least one of Claims 1-6, **characterized in that** the internal gear (25) comprises at least one axial and/or radially encircling groove (27).

8. Drive unit (10, 33) according to at least one of Claims 1-7, **characterized in that** a rotational speed sensor (15, 30) for the rotational speed of a shaft of the gearing unit (33) and/or of the electric machine (10) is in the form of an ABS sensor (30).

9. Drive unit (10, 33) according to Claim 8, **characterized in that** a magnet ring (31) for the detection of the rotational speed of the shaft by way of the ABS sensor (30) is arranged on the shaft of the gearing unit (33).

10. Drive unit (10, 33) according to at least one of Claims 1-9, **characterized in that** the internal gear (25) is produced from steel and/or the housing of the electric machine (10) is produced from aluminium.

11. Vehicle twist beam axle (1) comprising in each case one drive unit (10, 33) according to at least one of Claims 1-10 on respectively opposite sides of the twist beam axle (1), on in each case one longitudinal link (1b), for the purposes of respectively driving a wheel from near to the wheel.

## Revendications

1. Unité d'entraînement (10, 33) pour un véhicule électrique, comprenant une machine électrique (10) pouvant être disposée dans une région d'un côté avant d'un essieu de véhicule (1) du véhicule automobile ainsi qu'une unité de transmission (33) qui coopère avec la machine électrique (10) pour l'entraînement de la roue respective (5) du véhicule électrique, l'essieu de véhicule (1) étant un essieu à traverse déformable en torsion, la machine électrique (10) et l'unité de transmission (33) pouvant être disposées à proximité de la roue au niveau d'un bras oscillant longitudinal (1b) de l'essieu de véhicule (1), et la machine électrique (10) étant réalisée de telle sorte que la machine électrique (10) puisse être disposée à proximité de la roue au niveau de l'un quelconque des deux côtés avant de l'essieu de véhicule (1) dans l'unité d'entraînement en vue de l'entraînement de la roue respective (4),
l'unité de transmission (33) comprenant un engrenage planétaire avec une couronne dentée (25), la couronne dentée (25) pouvant être fixée au niveau d'un dispositif de réception (23) de la machine électrique (10) dans la direction axiale sur la machine électrique (10),
l'unité de transmission (33) comprenant un étage à pignon droit, et
le couple d'entraînement de la machine électrique (10) pouvant être transmis à l'étage à pignon droit par le biais de l'engrenage planétaire.

2. Unité d'entraînement (10, 33) selon la revendication 1, **caractérisée en ce que** la machine électrique (10), en particulier son boîtier, est réalisée de manière symétrique.

3. Unité d'entraînement (10, 33) selon au moins l'une quelconque des revendications 1 à 2, **caractérisée en ce que** la machine électrique (10) présente des moyens de fixation (22) qui sont disposés symétriquement, en particulier avec une symétrie radiale par rapport à un axe d'entraînement moteur respectif (13) de la machine électrique (10).

4. Unité d'entraînement (10, 33) selon au moins l'une quelconque des revendications 1 à 3, **caractérisée en ce qu'**au moins une entrée de fluide de refroidissement (21a) et une sortie de fluide de refroidissement (21b) sont prévues pour le refroidissement de la machine électrique (10), celles-ci étant disposées symétriquement par rapport aux moyens de fixation (22) et/ou à distance l'une de l'autre et l'une derrière l'autre parallèlement à un axe d'entraînement (13) de la machine électrique (10).

5. Unité d'entraînement (10, 33) selon au moins l'une quelconque des revendications 1 à 4, **caractérisée en ce que** le dispositif de réception (23) comprend au moins un ergot de réception qui est notamment réalisé en forme de U.

6. Unité d'entraînement (10, 33) selon au moins l'une quelconque des revendications 1 à 5, **caractérisée en ce que** la couronne dentée (25) est fixée, notamment de manière solidaire en rotation, au moyen d'une bague de fixation (26) sur le dispositif de réception (23).

7. Unité d'entraînement (10, 33) selon au moins l'une quelconque des revendications 1 à 6, **caractérisée en ce que** la couronne dentée (25) comprend au moins une rainure axiale et/ou radialement périphérique (27).

8. Unité d'entraînement (10, 33) selon au moins l'une quelconque des revendications 1 à 7, **caractérisée en ce qu'**un capteur de vitesse de rotation (15, 30) pour la vitesse de rotation d'un arbre de l'unité de transmission (33) et/ou de la machine électrique (10) est réalisé sous forme de capteur ABS (30).

9. Unité d'entraînement (10, 33) selon la revendication 8, **caractérisée en ce qu'**une bague magnétique (31) pour la détection de la vitesse de rotation de l'arbre par le capteur ABS (30) est disposée sur l'arbre de l'unité de transmission (33).

10. Unité d'entraînement (10, 33) selon au moins l'une quelconque des revendications 1 à 9, **caractérisée en ce que** la couronne dentée (25) est fabriquée en acier et/ou le boîtier de la machine électrique (10) est fabriqué en aluminium.

11. Essieu à traverse déformable en torsion de véhicule (1), comprenant à chaque fois une unité d'entraînement (10, 33) selon au moins l'une quelconque des revendications 1 à 10, sur des côtés respectivement opposés de l'essieu à traverse déformable en torsion (1) au niveau d'un bras oscillant longitudinal respectif (1b) pour l'entraînement d'une roue, dans chaque cas proche de la roue.
